# EUROPEAN PATENT APPLICATION

(11) **EP 1 892 714 A1**
(43) Date of publication of application: **27.02.2008**
(21) Application number: 06125271.4
(22) Date of filing: 01.12.2006
(51) Int. Cl.: G11B 27/031, G11B 20/12

(54) **Method, system and apparatus for transforming a multimedia data format**

(30) Priority: 24.08.2006 US 466800
(71) Applicant: Mediatek Inc., Taiwan (TW)
(72) Inventor: Kao, Shih-rong, 300, Hsinchu City (TW); Chao, Chien-Ming, Songshan District 105 Taipei City (TW)
(74) Representative: Patentanwälte Kewitz & Kollegen

(57) **Abstract**

A method for transforming a multimedia data format is provided, applied for transformation of multimedia data in a first format to multimedia data in a second format. The multimedia data comprises a plurality of video object units (VOBUs). The first format may be the DVD-VR format or the DVD+VR/-VIDEO format, as well as the second format. Multimedia data in a first format comprising multimedia data, first timing information, and size information is provided. The first timing information indicates playback time of each VOBU by a number of playback frames. The first timing information is transformed to second timing information. The second timing information (VOBU_E_PTM) is derived from a number of playback frames and frame playback time. The size information of each VOBU is transformed to address information of each VOBU. The multimedia data in a second format comprising the second timing information and the address information of each VOBU is stored.

## Description

### BACKGROUND OF THE INVENTION

### Field of the Invention

The present invention relates to data format transformation, and in particular to a method for transforming a first multimedia data format to a second multimedia data.

### Description of the Related Art

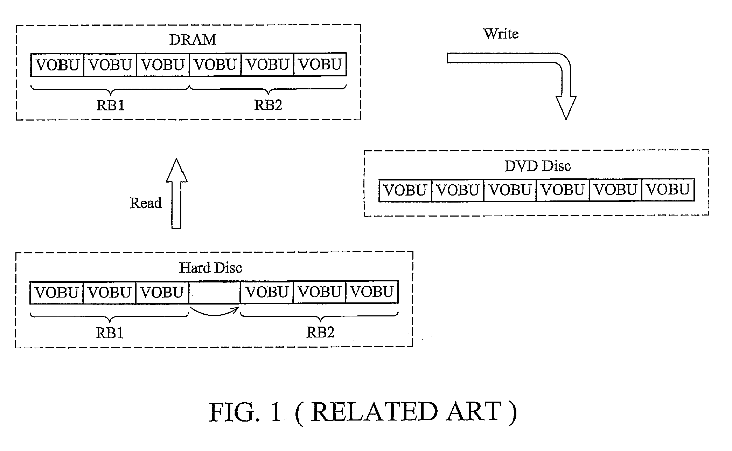

For a HDD/DVD combo recorder, one or more titles recorded in the HDD and edited may be archived to a DVD disc. When the titles in HDD and that in DVD are all MPEG2 program streams, the titles can be archived by copying the programs streams directly at high speed, as shown in Fig. 1, in which multiple video object units (VOBUs) are grouped as a recording block (RB1, RB2, ...) and the program streams are read from the HDD, stored in a Dynamic Random Access Memory (DRAM), and then written to the DVD disc.

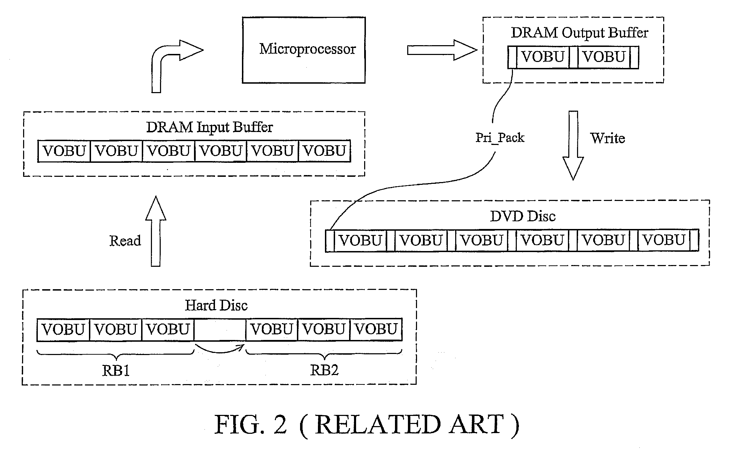

In practice, the disc format applied in a DVD, for example, DVD-Video, or DVD+VR, requires addition of a private pack in each video sequence of a program stream to be compatible with general DVD players. Since content of additional packs is determined based on the program streams and editing results, the copy process may require a microcontroller to encourage the generation of private packs, as shown in Fig. 2.

When the DVD writing speed accelerates, matching the data transfer rate with the disc writing speed is an issue, if the data transfer rate lags, buffer under-run may occur, requiring more time to recover from interruption of the burning process. Thus, overall copy speed must be lowered.

In the PC environment in which various application and hardware components are installed, CPU response time may not be certified for a copy process with real-time requirements, such that an image file is first created and burned to a disc to eliminate the real-time processing requirements for high-speed copy processes.

With respect to a DVD/HDD recorder, since installed hardware components and software applications are all pre-built, the real-time requirements and the copy of titles may be satisfied without creating image files.

In a copy process, latency occurs due to the microcontroller process time and HDD seek time. In a copy system, a write buffer in DRAM is applied for cover of possible latency. If the possible latency is higher, the write buffer size should be larger. Since the HDD seek time is almost physical restriction and could not be eliminated, the copy system optimization focuses on the process of the microcontroller. If the copy process could be optimized, lesser buffer is used.

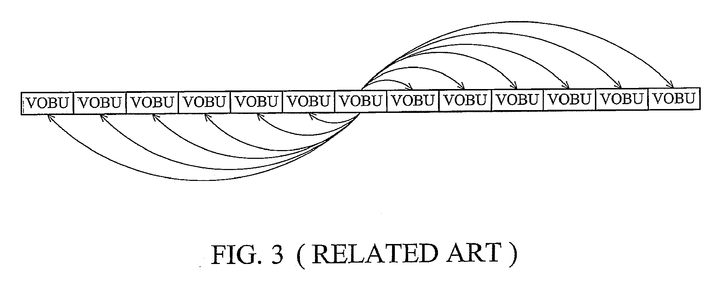

For the copied title in a DVD+VR or DVD-Video disc, a private pack in each VOBU contains backward and forward VOBU search indexes for trick mode playback in a DVD player, as shown in Fig. 3.

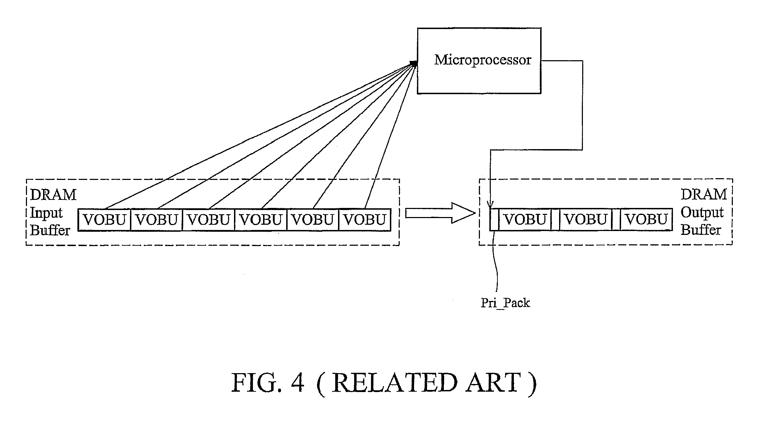

To set the private pack, a microcontroller calculates the copied VOBU size and sets the forward and backward reference indexes according to the size information, as shown in Fig. 4. To write out a VOBU immediately after reading the VOBU from the HDD, the next few VOBU data must first be obtained. Required disk information is collected and set to the private pack, and the VOBU can be written out. The described copy process requires more DRAM buffer and a longer process waiting time for each VOBU.

Thus, the invention provides a method for transforming a first multimedia data format to a second multimedia data format.

### BRIEF SUMMARY OF THE INVENTION

A method for transforming a multimedia data format, transforming first multimedia data format to second multimedia data format. The multimedia data comprises a plurality of video object units (VOBUs). The first format may be the DVD-VR format or the DVD+VR/-VIDEO format, as well as the second format.

A first embodiment of a method for transforming a multimedia data format is described in the following.

Multimedia data in a first format comprising multimedia data, first timing information, and size information is provided. The first timing information indicates the playback time of each VOBU by a number of playback frames. The first timing information is transformed to second timing information. The second timing information (VOBU_E_PTM) is derived from a number of playback frames and the frame playback time. The size information of each VOBU is transformed to address information of each VOBU. The multimedia data in a second format comprising the second timing information and the address information of each VOBU is stored.

A second embodiment of a method for transforming a multimedia data format is described in the following.

Multimedia data in a first format, comprising multimedia data, first timing information, and size information, is provided. The first timing information and the size information of each VOBU are transformed to search information. The multimedia data in a second format comprising the search information of each VOBU is stored. Additionally, the search information comprises forward information (FWDI) and backward information (BWDI).

A third embodiment of a method for transforming a multimedia data format is described in the following.

Private data corresponding to the multimedia data in a second format in a first storage medium is provided. The multimedia data in a first fonnat is stored in the first storage medium. The private data comprises address information of frames in each VOBU and synchronization information. The address information indicates second reference information and third reference information. Next, the multimedia data in a first format is transformed to the multimedia data in a second format according to the private data. The multimedia data in a second format is stored in a second storage medium. The first or second storage medium is an optical storage medium.

A fourth embodiment of a method for transforming a multimedia data format is described in the following.

Private data corresponding to the multimedia data in a second format is retrieved from a manufacturer information (MNFI) field of the multimedia data in a first format. The private data comprises address information of frames in each VOBU and synchronization information. The address information indicates second reference information and third reference information. Next, the multimedia data in a first format (the DVD-VR format) is transformed to the multimedia data in a second format according to the private data. The multimedia data in a second fonnat comprising information derived from the retrieved private data is stored. The first or second storage medium is an optical storage medium.

A fifth embodiment of a method for transforming a multimedia data format is described in the following.

The differential information between the multimedia data in a first format and the multimedia data in a second format is retrieved from a storage medium. The multimedia data in a second format consists of the differential information and VOBUs. The multimedia data in a first format is transformed to the multimedia data in a second format according to the differential information. The multimedia data in a second format comprising the differential information is stored.

A sixth embodiment of a method for transforming a multimedia data format is described in the following.

The differential information stored in a user-defined area is retrieved. The differential information is used to generate the multimedia data in a second format based on the multimedia data in a first format. The user-defined area is an MNFI field, a reserved area, or a private area. The multimedia data in a first format is transformed to the multimedia data in a second format according to the differential information. The multimedia data in a second format comprising the differential information is stored.

A seventh embodiment of a method for transforming a multimedia data format is described in the following.

Multimedia data in a first format, comprising multimedia data and address information of each VOBU, is provided. The address information of each VOBU is transformed to search information. The multimedia data in a second fonnat comprising the search information of each VOBU is stored.

An apparatus for transforming a multimedia data format is described in the following. The apparatus comprises a controller, a transformation unit, a first storage medium, and a second storage medium. The first storage medium or second storage medium can be, but is not limited to, an optical storage medium or a hard disk.

The transformation apparatus is applied for transformation of multimedia data in a first format to multimedia data in a second format. The multimedia data comprises a plurality of video object units (VOBUs). The multimedia data in a first format is stored in the first storage medium. The multimedia data in a second format is stored in the second storage medium.

A first example of the apparatus for transforming a multimedia data format is described in the following.

The controller sends a transformation command. When the transformation command is received, the transformation unit transforms first timing information and size information of each VOBU, provided by multimedia data in a first format comprising multimedia data, to second timing information and address information of each VOBU, and stores the multimedia data in a second format comprising the second timing information and the address information of each VOBU. The first timing information indicates playback time of each VOBU by a number of playback frames and the second timing information is derived from a number of playback frames and frame playback time.

A second example of the apparatus for transforming a multimedia data format is described in the following.

The controller sends a transformation command. When the transformation command is received, the transformation unit transforms the multimedia data in a first format to the multimedia data in a second format according to private data corresponding to the multimedia data in a second format in a first storage medium in which the multimedia data in a first fonnat is stored, and stores the multimedia data in a second format in a second storage medium.

A third example of the apparatus for transforming a multimedia data format is described in the following.

The controller sends a transformation command. When the transformation command is received, the transformation unit retrieves private data corresponding to the multimedia data in a second format from a manufacturer information (MNFI) field of the multimedia data in a first format, transforms the multimedia data in a first format to the multimedia data in a second format according to the private data, and stores the multimedia data in a second format comprising information derived from the retrieved private data.

A fourth example of the apparatus for transforming a multimedia data format is described in the following.

The controller sends a transformation command. When the transformation command is received, the transformation unit retrieves the differential information between the multimedia data in a first format and the multimedia data in a second format from a storage medium, in which the multimedia data in a second format consists of the differential information and VOBUs, transforms the multimedia data in a first format to the multimedia data in a second format according to the differential information, and stores the multimedia data in a second format comprising the differential information.

A fifth example of the apparatus for transforming a multimedia data format is described in the following.

The controller sends a transformation command. When the transformation command is received, the transformation unit retrieves the differential information stored in a user-defined area, transforms the multimedia data in a first format to the multimedia data in a second format according to the differential information, and stores the multimedia data in a second format comprising the differential information. The differential information is used to generate the multimedia data in a second format based on the multimedia data in a first format.

A sixth example of the apparatus for transforming a multimedia data format is described in the following.

The controller sends a transformation command. When the transformation command is received, the transformation unit transforms the address information of each VOBU, provided by multimedia data in a first format comprising multimedia data and the address information of each VOBU, to search information, and stores the multimedia data in a second format comprising the search information of each VOBU.

A system for transforming a multimedia data format is provided. The system comprises a first storage medium, a transformation device, and a second storage medium. The first storage medium or second storage medium can be, but is not limited to, an optical storage medium or a hard disk.

The transformation system is applied for transformation of multimedia data in a first format to multimedia data in a second format. The multimedia data comprises a plurality of video object units (VOBUs). The multimedia data in a first format is stored in the first storage medium. The multimedia data in a second format is stored in the second storage medium.

A first example of the system for transforming a multimedia data format is described in the following.

The first storage medium stores the multimedia data in a first format comprising multimedia data, first timing information, and size information. The first timing information indicates playback time of each VOBU by a number of playback frames. The transformation device transforms the first timing information and the size information of each VOBU to second timing information and address information of each VOBU and stores the multimedia data in a second format comprising the second timing information in the second storage medium. The second timing information is derived from a number of playback frames and frame playback time.

A second example of the system for transforming a multimedia data format is described in the following.

The first storage medium stores multimedia data in a first format, comprising multimedia data, first timing information, and size information. The transformation device transforms the first timing information and the size information of each VOBU to search information, and stores the multimedia data in a second format comprising the search information of each VOBU in the second storage medium.

A third example of the system for transforming a multimedia data format is described in the following.

The first storage medium stores the multimedia data in a first format and provides private data corresponding to the multimedia data in a second format. The transformation device transforms the multimedia data in a first format to the multimedia data in a second format according to the private data, and stores the multimedia data in a second format in the second storage medium.

A fourth example of the system for transforming a multimedia data format is described in the following.

The first storage medium stores multimedia data in a first fonnat and provides a manufacturer information (MNFI) field. The transformation device retrieves private data corresponding to the multimedia data in a second format from the manufacturer information (MNFI) field, transforms the multimedia data in a first format to the multimedia data in a second format according to the private data stored in the MNFI field, and stores the multimedia data in a second format comprising information derived from the retrieved private data in the second storage medium.

A fifth example of the system for transforming a multimedia data format is described in the following.

The first storage medium stores multimedia data in a first format. The second storage medium stores multimedia data in a second format to be generated. The transformation device obtains the differential information between the multimedia data in a first format and the multimedia data in a second format to be generated, transforms the multimedia data in a first format to the multimedia data in a second format according to the differential information, and stores the multimedia data in a second format comprising the differential information in the second storage medium. The multimedia data in a second format to be generated consists of the differential information and VOBUs.

A sixth example of the system for transforming a multimedia data format is described in the following.

The first storage medium stores multimedia data in a first format and provides a user-defined area. The second storage medium stores multimedia data in a second format to be generated. The transformation device retrieves the differential information stored in the user-defined area, transforms the multimedia data in a first format to the multimedia data in a second format according to the differential information, and stores the multimedia data in a second format comprising the differential information in the second storage medium. The differential information is used to generate the multimedia data in a second format based on the multimedia data in a first format.

A seventh example of the system for transforming a multimedia data format is described in the following.

The first storage medium stores multimedia data in a first format, comprising multimedia data and address information of each VOBU. The transformation device transforms the address information of each VOBU to search information, and stores the multimedia data in a second format comprising the search information of each VOBU in the second storage medium.

A detailed description is given in the following embodiments with reference to the accompanying drawings.

### BRIEF DESCRIPTION OF THE DRAWINGS

The present invention can be more fully understood by reading the subsequent detailed description and examples with references made to the accompanying drawings, wherein:

Fig. 1 is a schematic view of a process for copying a HDD title to a DVD;

Fig. 2 is a schematic view of a process for adding private packs using a microprocessor;

Fig. 3 is a schematic view of forward reference and backward reference for VOBUs;

Fig. 4 is a schematic view of a process for generating private packs according to buffer content;

Fig. 5 is a schematic view of an exemplary embodiment of a data structure for the DVD-VR format;

Fig. 6 is a schematic view of an exemplary embodiment of a data structure for the DVD+VR format;

Figs. 7A and 7B are schematic views of multimedia data format transformation between the DVD+VR format and the DVD-VR format for the first VOBU;

Figs. 8A and 8B are schematic views of multimedia data format transformation between the DVD+VR format and the DVD-VR format for the second VOBU;

Fig. 9 is a flowchart of a first embodiment of a method for transforming a multimedia data format;

Fig. 10 is a flowchart of a second embodiment of a method for transforming a multimedia data format;

Fig. 11 is a flowchart of a third embodiment of a method for transforming a multimedia data format;

Fig. 12 is a flowchart of a fourth embodiment of a method for transforming a multimedia data format;

Fig. 13 is a flowchart of a fifth embodiment of a method for transforming a multimedia data format;

Fig. 14 is a flowchart of a sixth embodiment of a method for transforming a multimedia data format;

Fig. 15 is a flowchart of a seventh embodiment of a method for transforming a multimedia data format;

Fig. 16 is a schematic view of an embodiment of a structure of an apparatus for transforming a multimedia data format;

Fig. 17 is a schematic view of an embodiment of a structure of a system for transforming a multimedia data format;

Fig. 18 is a functional block diagram of an embodiment of a structure of a system for transforming a multimedia data format;

Fig. 19 is a schematic view of dubbing DVD+VR/-VIDEO format to DVD-VR format;

Fig. 20 is a flowchart of another embodiment of dubbing DVD+VR/-VIDEO format to DVD-VR format; and

Fig. 21 is a schematic view of dubbing DVD-VR format to DVD+VR/-VIDEO format; and

Fig. 22 is a flowchart of another embodiment of dubbing DVD-VR format to DVD+VR/-VIDEO format.

### DETAILED DESCRIPTION OF THE INVENTION

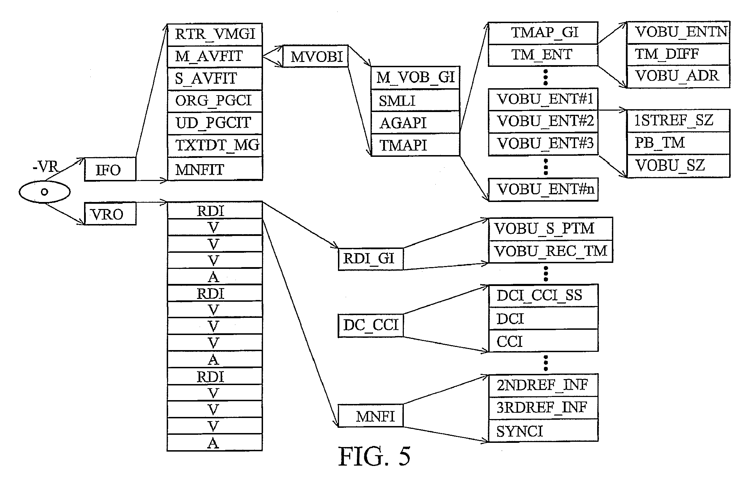

Several exemplary embodiments of the invention are described with reference to Figs. 5 through 22, which generally relate to transformation of different multimedia data formats. It is to be understood that the following disclosure provides many different embodiments as examples, for implementing different features of the invention. Specific examples of components and arrangements are described below to simplify the present disclosure. These are, of course, merely examples and are not intended to be limiting. In addition, the present disclosure may repeat reference numerals and/or letters in the various examples. This repetition is for the purpose of simplicity and clarity and does not in itself dictate a relationship between the various embodiments and/or configurations discussed.

The invention discloses a method for transforming a multimedia data format applied for transformation of multimedia data in a first format to multimedia data in a second format.

The invention provides a fast copy method for transforming multimedia data between DVD-Video/+VR and DVD-VR standards.

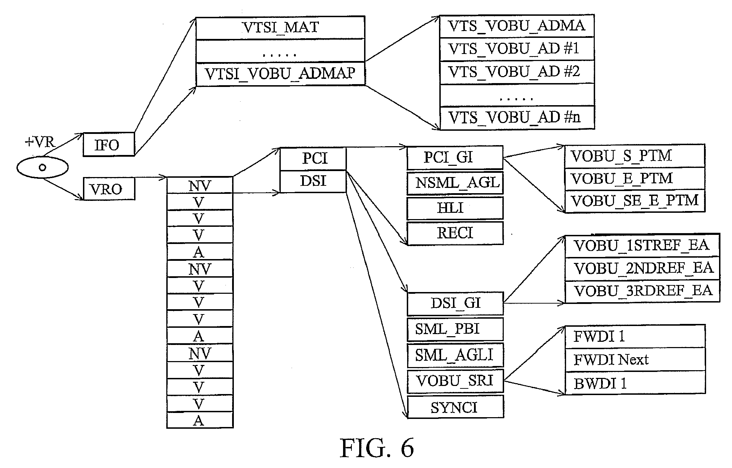

Fig. 5 is a schematic view of an exemplary embodiment of a data structure for the DVD-VR format. Fig. 6 is a schematic view of another exemplary embodiment of a data structure for the DVD+VR format. The difference is that timing information of the DVD-VR format indicates playback time of each VOBU by a number of playback frames and that of the DVD+VR format is derived from VOBU addresses and time search information. Additionally, the capacity of a VOBU for the DVD-VR format is represented by size information and that for the DVD+VR format is represented by address information. Both the structures comply with the DVD specification, which is not specially described herein. Further, the structure for the DVD-VIDEO format is similar to the DVD+VR format, but the DVD-VIDEO format further provides search information (SRI), which is derived from forward information (FWDI) and backward information (BWDI) of the DVD+VR format.

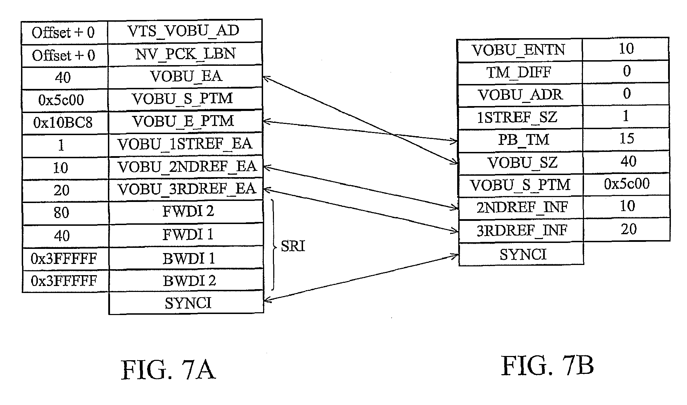

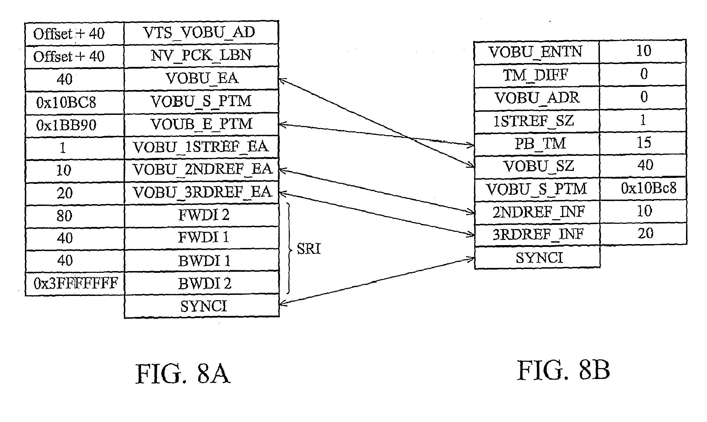

Figs. 7A and 7B are schematic views of multimedia data format transformation between the DVD+VR format and the DVD-VR format for the first VOBU. Figs. 8A and 8B are schematic views of multimedia data format transformation between the DVD+VR format and the DVD-VR format for the second VOBU. As shown in Fig. 7A and 8A, when the second VOBU is obtained, values of address information (VOBU_EA), timing information (VOUB_E_PTM), and search information (BWDI 1) are changed. As shown in Fig. 7B and 8B, when the second VOBU is obtained, timing information (VOBU_S_PTM) changes. Referring to Figs 7A, 7B, 8A, and 8B, timing information, address information, sizing information, searching information, synchronization information, and so forth can be obtained to transform multimedia in a first format to multimedia data in a second format, achieving fast copy. It is noted that 2NDREF_INF, 3RDREF_INF, and SYNCI fields are the private data.

A method for transforming a multimedia data format of the invention is applied for transformation of multimedia data in a first format to multimedia data in a second format. The multimedia data comprises a plurality of video object units (VOBUs). The first format may be the DVD-VR format or the DVD+VR/-VIDEO format, as well as the second format.

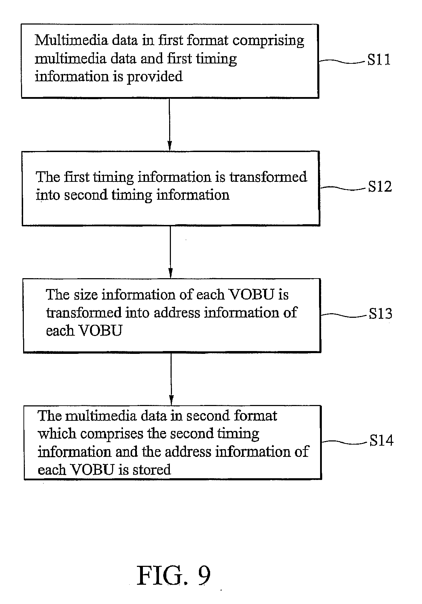

Fig. 9 is a flowchart of a first embodiment of a method for transforming a multimedia data format.

Referring to Fig. 5 - Fig, 8, multimedia data in a first format comprising multimedia data, first timing information (PB_TM), and size information (VOBU_SZ) is provided (step S11). The first timing information indicates playback time of each VOBU by a number of playback frames. The first timing information (PB_TM) is transformed to second timing information (VOBU_E_PTM) (step S12). The second timing information (VOBU_E_PTM) is derived from a number of playback frames, with pre-determined frame playback time. The size information (VOBU_SZ) of each VOBU is transformed to address information (VOBU_EA) of each VOBU (step S13). Additionally, address information comprised in VTS_VOBU_AD and NV_PCK_LBN fields (as shown in Figs. 7A, 7B, 8A, and 8B) may also be derived from the size information (VOBU_SZ). The multimedia data in a second format comprising the second timing information (VOBU_E_PTM) and the address information (VOBU_EA) of each VOBU is stored (step S14).

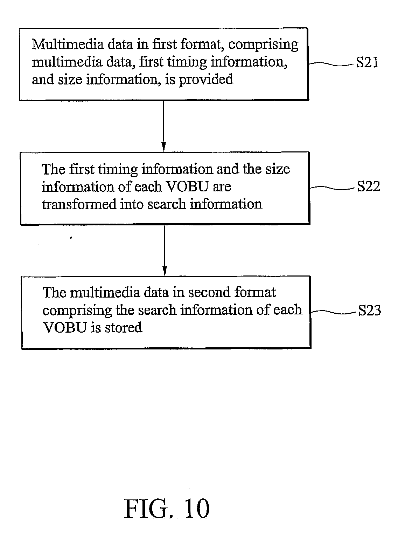

Fig. 10 is a flowchart of a second embodiment of a method for transforming a multimedia data format.

Referring to Fig. 5 ~ Fig, 8, multimedia data in a first format, comprising multimedia data, first timing information (PB_TM), and size information (VOBU_SZ), is provided (step S21). The first timing information (PB_TM) and the size information (VOBU_SZ) of each VOBU are transformed to search information (SRI) (step S22). The multimedia data in a second format comprising the search information of each VOBU is stored (step S23). Additionally, the search information comprises forward information (FWDI) and backward information (BWDI).

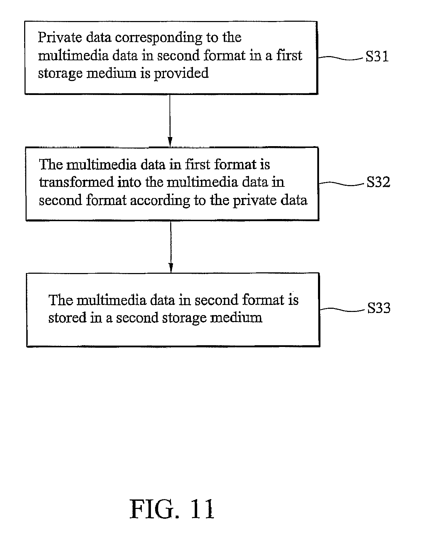

Fig. 11 is a flowchart of a third embodiment of a method for transforming a multimedia data format.

Referring to Fig. 5 ~ Fig, 8, private data corresponding to the multimedia data in a second format in a first storage medium is provided (step S31). The multimedia data in a first format is stored in the first storage medium. The private data comprises address information of each VOBU and synchronization (SYNC) information. The address information indicates second reference information (2NDREF_INF) and third reference information (3RDREF _INF). Next, the multimedia data in a first format (the DVD-VR format) is transformed to the multimedia data in a second format according to the private data (step S32). The multimedia data in a second format is stored in a second storage medium (step S33). The first or second storage medium is an optical storage medium.

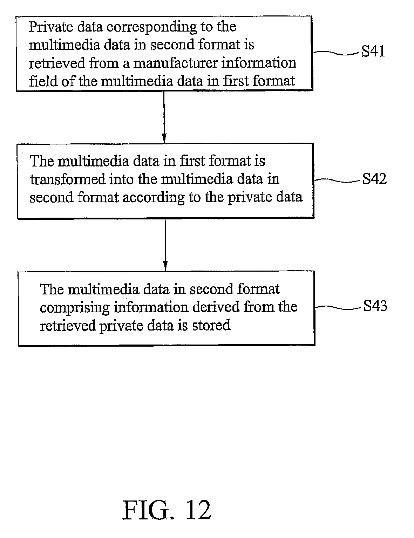

Fig. 12 is a flowchart of a fourth embodiment of a method for transforming a multimedia data format.

Referring to Fig. 5 ~ Fig, 8, private data corresponding to the multimedia data in a second format is retrieved from a manufacturer information (MNFI) field of the multimedia data in a first format (step S41). The private data comprises address information of frames of each VOBU and synchronization (SYNC) information. The address information indicates second reference information (2NDREF_INF) and third reference information (3RDREF_INF). Next, the multimedia data in a first format (the DVD-VR format) is transformed to the multimedia data in a second format according to the private data (step S42). The multimedia data in a second format comprising information derived from the retrieved private data is stored (step S43). The first or second storage medium is an optical storage medium.

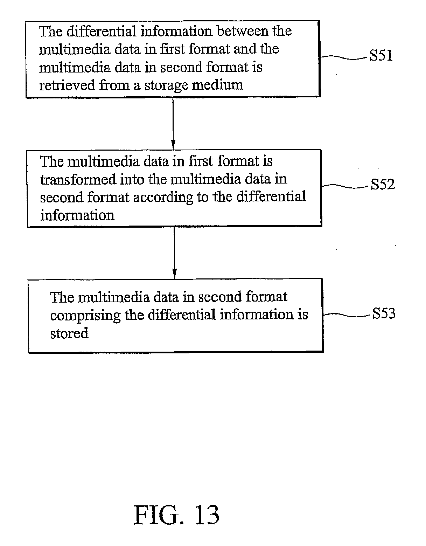

Fig. 13 is a flowchart of a fifth embodiment of a method for transforming a multimedia data format.

Referring to Fig. 5 ~ Fig, 8, the differential information between the multimedia data in a first format and the multimedia data in a second format is retrieved from a storage medium (step S51). The multimedia data in a second format consists of the auxiliary information based on the differential information and VOBUs. The auxiliary information can be the same as the differential information or not. The multimedia data in a first format is transformed to the multimedia data in a second format according to the differential information (step S52). The multimedia data in a second format comprising the differential information is stored (step S53).

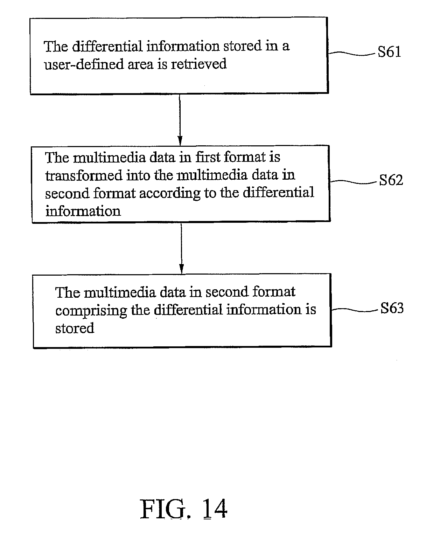

Fig. 14 is a flowchart of a sixth embodiment of a method for transforming a multimedia data format.

Referring to Fig. 5 ~ Fig, 8, the differential information stored in a user-defined area is retrieved (step S61). The differential information is used to generate the multimedia data in a second format based on the multimedia data in a first format. The user-defined area is an MNFI field, a reserved area, or a private area. The multimedia data in a first format is transformed to the multimedia data in a second format according to the differential information (step S62). The multimedia data in a second format comprising the differential information is stored (step S63).

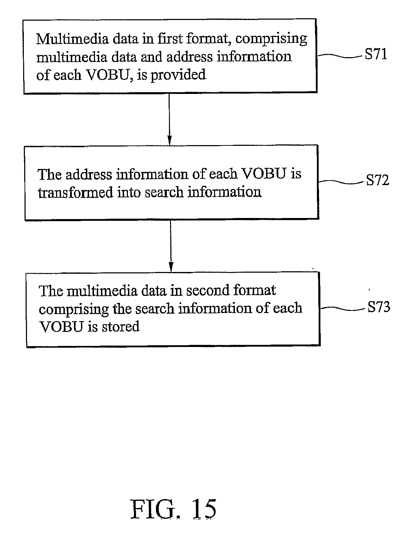

Fig. 15 is a flowchart of a seventh embodiment of a method for transforming a multimedia data format.

Referring to Fig. 5 ~ Fig, 8, multimedia data in a first format, comprising multimedia data and address information of each VOBU (VTSI_VOBU_ADMAP), is provided (step S71). The address information of each VOBU (VTSI_VOBU_ADMAP) is transformed to search information (SRI) (step S72). The multimedia data in a second format comprising the search information of each VOBU is stored (step S73).

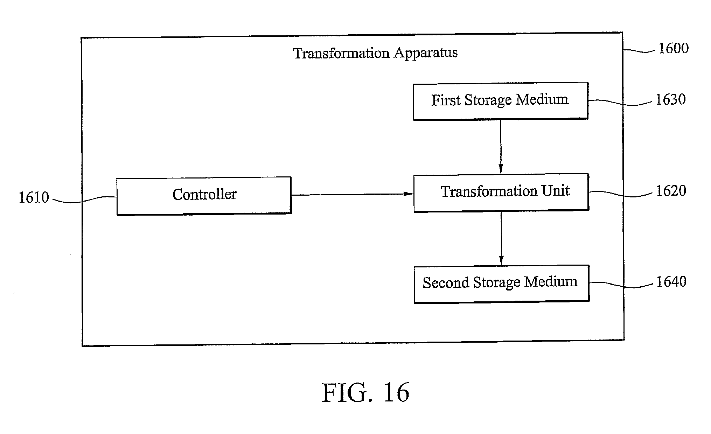

Fig. 16 is a schematic view of an embodiment of a structure of an apparatus for transforming a multimedia data format.

Transformation apparatus 1600 comprises a controller 1610, a transformation unit 1620, a first storage medium 1630, and a second storage medium 1640. First storage medium 1630 or second storage medium 1640 can be, but is not limited to, an optical storage medium or a hard disk.

Transformation apparatus 1600 is applied for transformation of multimedia data in a first format to multimedia data in a second format. The multimedia data comprises a plurality of video object units (VOBUs). The multimedia data in a first format is stored in first storage medium 1630. The multimedia data in a second format is stored in second storage medium 1640.

A first example of the apparatus for transforming a multimedia data format is described in the following.

Referring to Fig. 5 ~ Fig, 8, controller 1610 sends a transformation command. When the transformation command is received, transformation unit 1620 transforms first timing information (PB_TM) and size information (VOBU_SZ) of each VOBU, provided by multimedia data in a first format comprising multimedia data, to second timing information (VOBU_E_PTM) and address information (VOBU_EA) of each VOBU, and stores the multimedia data in a second format comprising the second timing information (VOBU_E_PTM) and the address information (VOBU_EA) of each VOBU. The first timing information indicates playback time of each VOBU by a number of playback frames and the second timing information (VOBU_E_PTM) is derived from a number of playback frames, with pre-determined frame playback time.

A second example of the apparatus for transforming a multimedia data format is described in the following.

Referring to Fig. 5 ~ Fig, 8, controller 1610 sends a transformation command. When the transformation command is received, transformation unit 1620 transforms the multimedia data in a first format to the multimedia data in a second format according to private data corresponding to the multimedia data in a second format in a first storage medium in which the multimedia data in a first format is stored, and stores the multimedia data in a second format in a second storage medium.

A third example of the apparatus for transforming a multimedia data format is described in the following.

Referring to Fig. 5 ~ Fig, 8, controller 1610 sends a transformation command. When the transformation command is received, transformation unit 1620 retrieves private data corresponding to the multimedia data in a second format from a manufacturer information (MNFI) field of the multimedia data in a first format, transforms the multimedia data in a first format to the multimedia data in a second format according to the private data of the MNFI, and stores the multimedia data in a second format comprising information derived from the retrieved private data.

A fourth example of the apparatus for transforming a multimedia data format is described in the following.

Referring to Fig. 5 ~ Fig, 8, controller 1610 sends a transformation command. When the transformation command is received, transformation unit 1620 retrieves the differential information between the multimedia data in a first format and the multimedia data in a second format from a storage medium, in which the multimedia data in a second fonnat consists of the auxiliary information based on the differential information and VOBUs, transforms the multimedia data in a first format to the multimedia data in a second format according to the differential information, and stores the multimedia data in a second format comprising the differential information. The auxiliary information can be the same as the differential information or not.

A fifth example of the apparatus for transforming a multimedia data format is described in the following.

Referring to Fig. 5 ~ Fig, 8, controller 1610 sends a transformation command. When the transformation command is received, transformation unit 1620 retrieves the differential information stored in a user-defined area, transforms the multimedia data in a first format to the multimedia data in a second format according to the differential information, and stores the multimedia data in a second format comprising the differential information. The differential information is used to generate the multimedia data in a second format based on the multimedia data in a first format.

A sixth example of the apparatus for transforming a multimedia data format is described in the following.

Referring to Fig. 5 ~ Fig, 8, controller 1610 sends a transformation command. When the transformation command is received, transformation unit 1620 transforms the address information of each VOBU (VTSI_VOBU_ADMAP), provided by multimedia data in a first format comprising multimedia data and the address information of each VOBU (VTSI_VOBU_ADMAP), to search information (SRI), and stores the multimedia data in a second format comprising the search information of each VOBU.

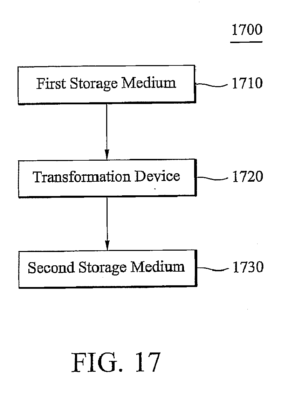

Fig. 17 is a schematic view an embodiment of a structure of a system for transforming a multimedia data format.

Transformation system 1700 comprises a first storage medium 1710, a transformation device 1720, and a second storage medium 1730. First storage medium 1710 or second storage medium 1730 can be, but is not limited to, an optical storage medium or a hard disk.

Transformation system 1700 is applied for transformation of multimedia data in a first format to multimedia data in a second format. The multimedia data comprises a plurality of video object units (VOBUs). The multimedia data in a first format is stored in first storage medium 1710. The multimedia data in a second format is stored in second storage medium 1730.

A first example of the system for transforming a multimedia data format is described in the following.

Referring to Fig. 5 ~ Fig, 8, first storage medium 1710 stores the multimedia data in a first format comprising multimedia data, first timing information (PB_TM), and size information (VOBU_SZ). The first timing information indicates playback time of each VOBU by a number of playback frames. Transformation device 1720 transforms the first timing information (PB_TM) and the size information (VOBU_SZ) of each VOBU to second timing information (VOBU_E_PTM) and address information (VOBU_EA) of each VOBU and stores the multimedia data in a second format comprising the second timing information (VOBU_E_PTM) in second storage medium 1730. The second timing information (VOBU_E_PTM) is derived from a number of playback frames, with pre-determined frame playback time.

A second example of the system for transforming a multimedia data format is described in the following.

Referring to Fig. 5 ~ Fig, 8, first storage medium 1710 stores multimedia data in a first format, comprising multimedia data, first timing information (PB_TM), and size information (VOBU_SZ). Transformation device 1720 transforms the first timing information (PB_TM) and the size information (VOBU_SZ) of each VOBU to search information (SRI), and stores the multimedia data in a second fonnat comprising the search information of each VOBU in second storage medium 1730.

A third example of the system for transforming a multimedia data format is described in the following.

Referring to Fig. 5 ~ Fig, 8, first storage medium 1710 stores the multimedia data in a first format and provides private data corresponding to the multimedia data in a second format. Transformation device 1720 transforms the multimedia data in a first format to the multimedia data in a second format according to the private data, and stores the multimedia data in a second format in second storage medium 1730.

A fourth example of the system for transforming a multimedia data format is described in the following.

Referring to Fig. 5 ~ Fig, 8, first storage medium 1710 stores multimedia data in a first format and provides a manufacturer information (MNFI) field. Transformation device 1720 retrieves private data corresponding to the multimedia data in a second format from the manufacturer information (MNFI) field, transforms the multimedia data in a first format to the multimedia data in a second format according to the private data, and stores the multimedia data in a second format comprising information derived from the retrieved private data of the MNFI in second storage medium 1730.

A fifth example of the system for transforming a multimedia data format is described in the following.

Referring to Fig. 5 ~ Fig, 8, first storage medium 1710 stores multimedia data in a first format. Second storage medium 1730 stores multimedia data in a second format to be generated. Transformation device 1720 obtains the differential information between the multimedia data in a first format and the multimedia data in a second format to be generated, transforms the multimedia data in a first format to the multimedia data in a second format according to the differential information, and stores the multimedia data in a second format comprising the auxiliary information in second storage medium 1730. The auxiliary information can be the same as the differential information or not. The multimedia data in a second format to be generated consists of the auxiliary information and VOBUs. The differential information is used to generate the multimedia data in a second format based on the multimedia data in a first format.

A sixth example of the system for transforming a multimedia data format is described in the following.

Referring to Fig. 5 ~ Fig, 8, first storage medium 1710 stores multimedia data in a first format and provides a user-defined area. Second storage medium 1730 stores multimedia data in a second format to be generated. Transformation device 1720 retrieves the differential information stored in the user-defined area, transforms the multimedia data in a first format to the multimedia data in a second format according to the differential information, and stores the multimedia data in a second format comprising the differential information in second storage medium 1730. The differential information is used to generate the multimedia data in a second format based on the multimedia data in a first format.

A seventh example of the system for transforming a multimedia data format is described in the following.

Referring to Fig. 5 ~ Fig, 8, first storage medium 1710 stores multimedia data in a first format, comprising multimedia data and address information of each VOBU (VTSI_VOBU_ADMAP). Transformation device 1720 transforms the address information of each VOBU (VTSI_VOBU_ADMAP) to search information (SRI), and stores the multimedia data in a second format comprising the search information of each VOBU in second storage medium 1730.

The following further briefly describes a system and method for transformation between DVD-VR format and DVD+VR/-VIDEO format.

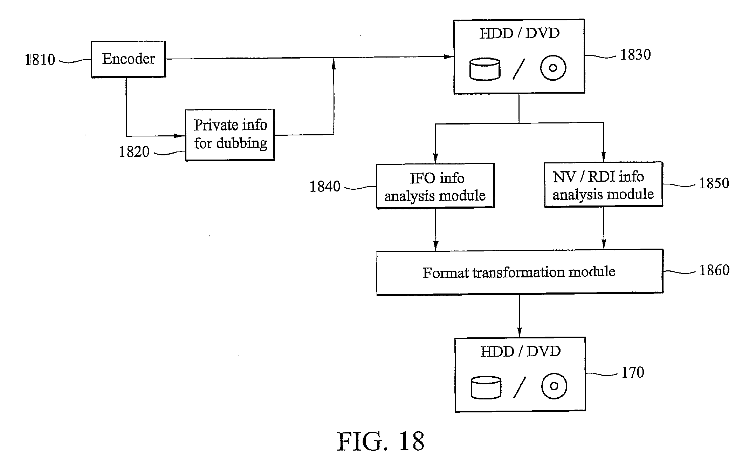

Fig. 18 is a functional block diagram of an embodiment of a structure of a system for transforming a multimedia data format.

Encoder 1810 dubs multimedia data in a first format stored in a first storage medium (HDD or DVD) 1830 according to private information 1820. The multimedia data in a first format is analyzed using IFO information analysis module 1840 and NV/RDI information analysis module 1850 based on the DVD-VR format or DVD+VR/-VIDEO format, and is transformed to multimedia data in a second format using format transformation module 1860. The multimedia data in a second fonnat is stored in a second storage medium (HDD or DVD) 1870.

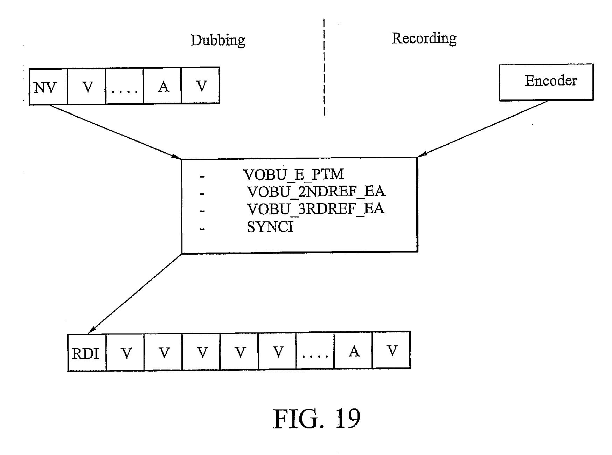

Fig. 19 is a schematic view of dubbing DVD+VR/-VIDEO format to DVD-VR format.

When a dubbing process from DVD+VR/-VIDEO format to DVD-VR format is required, dubbing information, comprising VOBU_E_PTM, VOBU_ISTREE_EA, VOBU_2NDREF_EA, VOBU_3RDREF_EA, VTSI_VOBU_ADMAP, and SYNCI, is extracted and saved in an RDI pack MNFI field. Thus, multimedia data in DVD+VR/-VIDEO format can be transformed to multimedia data in DVD-VR format according to the extracted information.

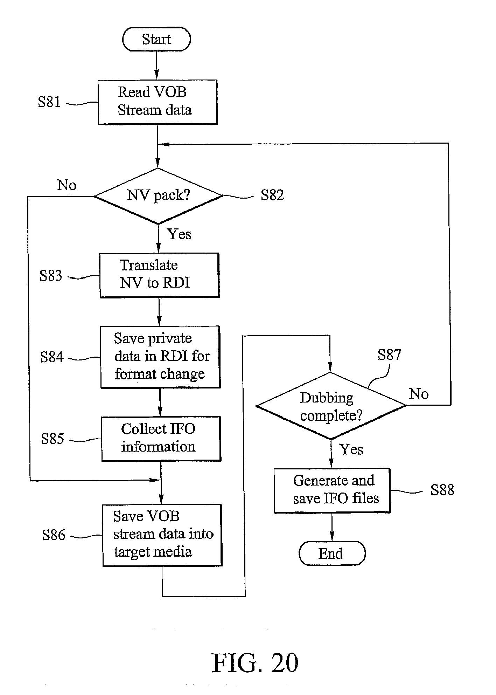

Fig. 20 is a flowchart of another embodiment of dubbing DVD+VR/-VIDEO format to DVD-VR format.

VOB stream data for DVD+VR/-VIDEO format is first read (step S81). It is determined whether a navigation pack (NV) exists (step S82). If the navigation pack exists, the navigation pack is translated to an RDI pack (step S83). Private data is saved in an RDI pack (MNFI field) for format change (step S84), and IFO information is collected (step S85). If the navigation pack does not exist, VOB stream data for the DVD-VR format is saved in target media (step S86). It is then determined whether the dubbing process is complete (step S87). If not, the process proceeds to step S82. If so, multimedia data for the DVD-VR format is generated and IFO files are saved (step S88).

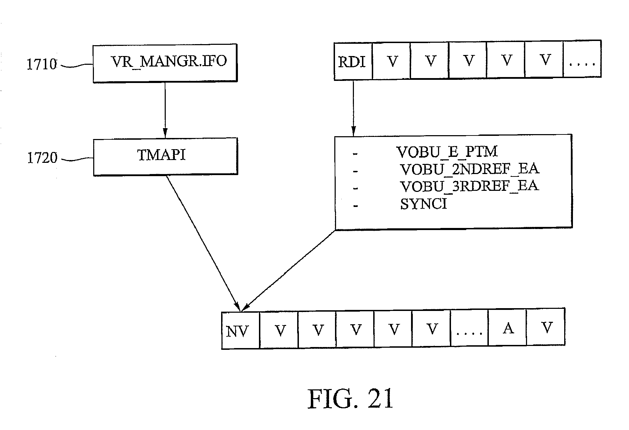

Fig. 21 is a schematic view of dubbing DVD-VR format to DVD+VR/-VIDEO format.

When a dubbing process from DVD-VR format to DVD+VR/-VIDEO format is required, dubbing information, comprising VOBU_E_PTM, VOBU_1STREF_EA, VOBU_2NDREF_EA, VOBU_3RDREF_EA, SYNCI, and time map information (TMAPI), is extracted and saved in a navigation pack (NV). Thus, multimedia data in DVD-VR format can be transformed to multimedia data in DVD+VR/-VIDEO format according to the extracted information.

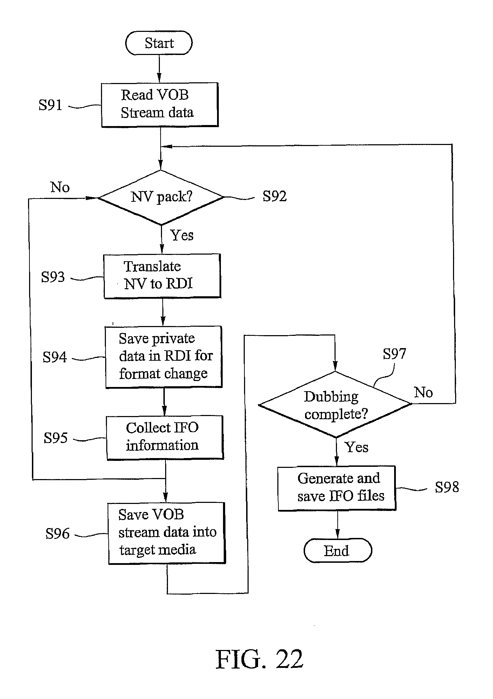

Fig. 22 is a flowchart of another embodiment of dubbing DVD-VR format to DVD+VR/-VIDEO format.

IFO information is first obtained (step S91). VOB stream data for DVD-VR format is read (step S92). It is determined whether an RDI pack exists (step S93). If the RDI pack exists, the RDI pack is translated to an NV pack according to the IFO information and private data (MNFI field) (step S94). IFO information is collected (step S95). If the RDI pack does not exist, VOB stream data for the DVD+VR/-VIDEO format is saved in target media (step S96). It is then determined whether the dubbing process is complete (step S97). If not, the process proceeds to step S93. If so, multimedia data for the DVD+VR/-VIDEO format is generated and IFO files are saved (step S98).

While the invention has been described by way of example and in terms of the preferred embodiments, it is to be understood that the invention is not limited to the disclosed embodiments. To the contrary, it is intended to cover various modifications and similar arrangements (as would be apparent to those skilled in the art). Therefore, the scope of the appended claims should be accorded the broadest interpretation so as to encompass all such modifications and similar arrangements.

## Claims

1. A method for transforming a multimedia data format, applied for transformation of multimedia data in a first format to multimedia data in a second format, wherein the multimedia data comprises a plurality of video object units (VOBUs), comprising:
providing multimedia data in a first format comprising multimedia data and first timing information, wherein the first timing information indicates playback time of each VOBU by a number of playback frames;
transforming the first timing information to second timing information, wherein the second timing information is derived from a number of playback frames and playback time of a frame;
storing the multimedia data in a second format comprising the second timing information.

2. A method for transforming a multimedia data format, applied for transformation of multimedia data in a first format to multimedia data in a second format, wherein the multimedia data comprises a plurality of VOBUs, comprising:
providing multimedia data in a first format comprising multimedia data and size information;
transforming the size information of each VOBU to address information of each VOBU;
storing the multimedia data in a second format comprising the address information of each VOBU.

3. A method for transforming a multimedia data format, applied for transformation of multimedia data in a first format to multimedia data in a second format, wherein the multimedia data comprises a plurality of VOBUs, comprising:
providing multimedia data in a first format comprising multimedia data, first timing information, and size information;
transforming the first timing information and the size information of each VOBU to search information;
storing the multimedia data in a second format comprising the search information of each VOBU.

4. The method for transforming a multimedia data format as claimed in claim 3, wherein the search information comprises forward information and backward information.

5. A method for transforming a multimedia data fonnat, applied for transformation of multimedia data in a first format to multimedia data in a second format, wherein the multimedia data comprises a plurality of VOBUs, comprising:
providing private data corresponding to the multimedia data in a second format in a first storage medium in which the multimedia data in a first format is stored;
transforming the multimedia data in a first format to the multimedia data in a second format according to the private data; and
storing the multimedia data in a second format in a second storage medium.

6. The method for transforming a multimedia data format as claimed in claim 5, wherein the private data comprises address information of frames of each VOBU and synchronization information.

7. The method for transforming a multimedia data format as claimed in claim 6, wherein the address information indicates second reference information and third reference information.

8. The method for transforming a multimedia data format as claimed in claim 5, wherein one of said storage mediums is an optical storage medium.

9. A method for transforming a multimedia data format, applied for transformation of multimedia data in a first format to multimedia data in a second format, wherein the multimedia data comprises a plurality of VOBUs, comprising:
retrieving private data corresponding to the multimedia data in a second format from a manufacturer information (MNFI) field of the multimedia data in a first format;
transforming the multimedia data in a first format to the multimedia data in a second format according to the private data; and
storing the multimedia data in a second format comprising information derived from the retrieved private data.

10. The method for transforming a multimedia data format as claimed in claim 9, wherein the private data comprises address information of frames of each VOBU and synchronization information.

11. The method for transforming a multimedia data format as claimed in claim 10, wherein the address information indicates second reference information and third reference information.

12. The method for transforming a multimedia data format as claimed in claim 9, wherein one of said multimedia data is stored on an optical storage medium.

13. A method for transforming a multimedia data format, applied for transformation of multimedia data in a first format to multimedia data in a second format, wherein the multimedia data comprises a plurality of VOBUs, comprising:
retrieving the differential information between the multimedia data in a first format and the multimedia data in a second format from a storage medium, wherein the multimedia data in a second format consists of the differential information and VOBUs;
transforming the multimedia data in a first format to the multimedia data in a second format according to the differential information; and
storing the multimedia data in a second format comprising the differential information.

14. A method for transforming a multimedia data format, applied for transformation of multimedia data in a first format to multimedia data in a second format, wherein the multimedia data comprises a plurality of VOBUs, comprising:
retrieving the differential information stored in a user-defined area, wherein the differential information is used to generate the multimedia data in a second format based on the multimedia data in a first format;
transforming the multimedia data in a first format to the multimedia data in a second format according to the differential information; and
storing the multimedia data in a second format comprising the differential information.

15. The method for transforming a multimedia data format as claimed in claim 14, wherein the user-defined area is an MNFI field, a reserved area, or a private area.

16. A method for transforming a multimedia data format, applied for transformation of multimedia data in a first format to multimedia data in a second format, wherein the multimedia data comprises a plurality of VOBUs, comprising:
providing multimedia data in a first format comprising multimedia data and address information of each VOBU;
transforming the address information of each VOBU to search information;
storing the multimedia data in a second format comprising the search information of each VOBU.

17. An apparatus for transforming a multimedia data format, applied for transformation of multimedia data in a first format to multimedia data in a second format, wherein the multimedia data comprises a plurality of video object units (VOBUs), comprising:
a controller, sending a transformation command; and
a transformation unit, coupled to the controller, when the transformation command is received, transforming a first timing information which is provided by multimedia data in a first format comprising multimedia data to second timing information, wherein the first timing information indicates playback time of each VOBU by a number of playback frames and the second timing information is derived from a number of playback frames and frame playback time, and storing the multimedia data in a second format comprising the second timing information.

18. An apparatus for transforming a multimedia data format, applied for transformation of multimedia data in a first format to multimedia data in a second format, wherein the multimedia data comprises a plurality ofVOBUs, comprising:
a controller, sending a transformation command; and
a transformation unit, coupled to the controller, when the transformation command is received, transforming the size information of each VOBU which is provided by multimedia data in a first format comprising multimedia data to address information of each VOBU, and storing the multimedia data in a second format comprising the address information of each VOBU.

19. An apparatus for transforming a multimedia data format, applied for transformation of multimedia data in a first format to multimedia data in a second format, wherein the multimedia data comprises a plurality of VOBUs, comprising:
a controller, sending a transformation command; and
a transformation unit, coupled to the controller, when the transformation command is received, transforming the multimedia data in a first format to the multimedia data in a second format according to private data corresponding to the multimedia data in a second format in a first storage medium in which the multimedia data in a first format is stored, and storing the multimedia data in a second format in a second storage medium.

20. An apparatus for transforming a multimedia data format, applied for transformation of multimedia data in a first format to multimedia data in a second format, wherein the multimedia data comprises a plurality of VOBUs, comprising:
a controller, sending a transformation command; and
a transformation unit, coupled to the controller, when the transformation command is received, retrieving private data corresponding to the multimedia data in a second format from a manufacturer information (MNFI) field of the multimedia data in a first format, transforming the multimedia data in a first fonnat to the multimedia data in a second format according to the private data, and storing the multimedia data in a second format comprising information derived from the retrieved private data.

21. An apparatus for transfonning a multimedia data format, applied for transformation of multimedia data in a first format to multimedia data in a second format, wherein the multimedia data comprises a plurality of VOBUs, comprising:
a controller, sending a transformation command; and
a transformation unit, coupled to the controller, when the transformation command is received, retrieving the differential information between the multimedia data in a first format and the multimedia data in a second format from a storage medium, wherein the multimedia data in a second format consists of the differential information and VOBUs, transforming the multimedia data in a first format to the multimedia data in a second format according to the differential information, and storing the multimedia data in a second format comprising the differential information.

22. An apparatus for transforming a multimedia data format, applied for transformation of multimedia data in a first format to multimedia data in a second format, wherein the multimedia data comprises a plurality of VOBUs, comprising:
a controller, sending a transformation command: and
a transformation unit, coupled to the controller, when the transformation command is received, retrieving the differential information stored in a user-defined area, wherein the differential information is used to generate the multimedia data in a second format based on the multimedia data in a first format, transforming the multimedia data in a first format to the multimedia data in a second format according to the differential information, and storing the multimedia data in a second format comprising the differential information.

23. An apparatus for transforming a multimedia data format, applied for transformation of multimedia data in a first format to multimedia data in a second format, wherein the multimedia data comprises a plurality of VOBUs, comprising:
a controller, sending a transformation command; and
a transformation unit, coupled to the controller, when the transformation command is received, transforming the address information of each VOBU which is provided by multimedia data in a first format comprising multimedia data and address information of each VOBU to search information, and storing the multimedia data in a second format comprising the search information of each VOBU.

24. A system for transforming a multimedia data format, applied for transformation of multimedia data in a first format to multimedia data in a second format, wherein the multimedia data comprises a plurality of video object units (VOBUs), comprising:
a first storage medium, storing multimedia data in a first format, comprising multimedia data and first timing information, wherein the first timing information indicates playback time of each VOBU by a number of playback frames;
a second storage medium; and
a transformation device, coupled to the first storage medium and the second storage medium, transforming the first timing information to second timing information, wherein the second timing information is derived from a number of playback frames and frame playback time, and storing the multimedia data in a second format comprising the second timing information in the second storage medium.

25. A system for transforming a multimedia data format, applied for transformation of multimedia data in a first format to multimedia data in a second format, wherein the multimedia data comprises a plurality of VOBUs, comprising:
a first storage medium, storing multimedia data in a first format, comprising multimedia data and size information;
a second storage medium; and
a transformation device, coupled to the first storage medium and the second storage medium, transforming the size information of each VOBU to address information of each VOBU, and storing the multimedia data in a second format comprising the address information of each VOBU in the second storage medium.

26. A system for transforming a multimedia data format, applied for transformation of multimedia data in a first format to multimedia data in a second format, wherein the multimedia data comprises a plurality of VOBUs, comprising:
a first storage medium, storing multimedia data in a first format, comprising multimedia data, first timing information, and size information;
a second storage medium; and
a transformation device, coupled to the first storage medium and the second storage medium, transforming the first timing information and the size information of each VOBU to search information, and storing the multimedia data in a second format comprising the search information of each VOBU in the second storage medium.

27. A system for transforming a multimedia data format, applied for transformation of multimedia data in a first format to multimedia data in a second format, wherein the multimedia data comprises a plurality of VOBUs, comprising:
a first storage medium, storing the multimedia data in a first format and providing private data corresponding to the multimedia data in a second format;
a second storage medium; and
a transformation device, coupled to the first storage medium and the second storage medium, transforming the multimedia data in a first format to the multimedia data in a second format according to the private data, and storing the multimedia data in a second format in the second storage medium.

28. A system for transforming a multimedia data format, applied for transformation of multimedia data in a first format to multimedia data in a second format, wherein the multimedia data comprises a plurality of VOBUs, comprising:
a first storage medium, storing multimedia data in a first format and providing a manufacturer information (MNFI) field;
a second storage medium; and
a transformation device, coupled to the first storage medium and the second storage medium, retrieving private data corresponding to the multimedia data in a second format from the manufacturer information (MNFI) field, transforming the multimedia data in a first format to the multimedia data in a second format according to the private data, and storing the multimedia data in a second format comprising information derived from the retrieved private data in the second storage medium.

29. A system for transforming a multimedia data format, applied for transformation of multimedia data in a first format to multimedia data in a second format, wherein the multimedia data comprises a plurality of VOBUs, comprising:
a first storage medium, storing multimedia data in a first format;
a second storage medium, storing multimedia data in a second format to be generated; and
a transformation device, coupled to the first storage medium and the second storage medium, obtaining the differential information between the multimedia data in a first format and the multimedia data in a second format to be generated, wherein the multimedia data in a second format to be generated consists of the differential information and VOBUs, transforming the multimedia data in a first format to the multimedia data in a second format according to the differential information, and storing the multimedia data in a second format comprising the differential information in the second storage medium.

30. A system for transforming a multimedia data format, applied for transformation of multimedia data in a first format to multimedia data in a second format, wherein the multimedia data comprises a plurality of VOBUs, comprising:
a first storage medium, storing multimedia data in a first format and providing a user-defined area;
a second storage medium, storing multimedia data in a second format to be generated; and
a transformation device, coupled to the first storage medium and the second storage medium, retrieving the differential information stored in the user-defined area, wherein the differential information is used to generate the multimedia data in a second format based on the multimedia data in a first format, transforming the multimedia data in a first format to the multimedia data in a second format according to the differential information, and storing the multimedia data in a second format comprising the differential information in the second storage medium.

31. A system for transforming a multimedia data format, applied for transformation of multimedia data in a first format to multimedia data in a second format, wherein the multimedia data comprises a plurality of VOBUs, comprising:
a first storage medium, storing multimedia data in a first format, comprising multimedia data and address information of each VOBU;
a second storage medium; and
a transformation device, coupled to the first storage medium and the second storage medium, transforming the address information of each VOBU to search information, and storing the multimedia data in a second format comprising the search information of each VOBU in the second storage medium.
